# EUROPEAN PATENT APPLICATION

(11) **EP 4 339 838 A1**
(43) Date of publication of application: **20.03.2024**
(21) Application number: 22200060.6
(22) Date of filing: 06.10.2022
(51) Int. Cl.: G06N 3/045

(54) **METHOD FOR OPERATING AN AUTOMATION SYSTEM AND AUTOMATION SYSTEM**

(30) Priority: 13.09.2022 DE 102022209568
(71) Applicant: Siemens Aktiengesellschaft, 80333 München (DE)
(72) Inventor: Kanj, Mohamad, 80937 München (DE); Mößbauer, Felix, 85570 Markt Schwaben (DE); Preclik, Tobias, 91085 Weisendorf (DE)
(74) Representative: Siemens Patent Attorneys

(57) **Abstract**

The method for operating an automation system (AUT) with a plurality of interacting devices (DEV) involves the steps of
- holding (HEL) a plurality of machine learning models that are configured to infer,
- estimating (EST) an inference time for each machine learning model, and
- attributing (ATT) the machine learning models to the devices (DEV) depending on the inference time and executing the machine learning models on the attributed devices, and
- operating (OPE) the automation system (AUT) with the accordingly executed machine learning models.

The automation system with a plurality of interacting devices (DEV) comprises
- a storage (MODSTS) containing machine learning models and/or an interface (FROS) to a source of machine learning models, and
- an inference server (INFS), which is configured to determine an inference time of the machine learning models, and an
- attribution planning unit (SCHA), which is configured to determine an attribution plan for the machine learning models onto the devices dependent on the inference times for execution.

## Description

The invention relates to a method for operating an automation system with a plurality of interacting devices and to an automation system with a plurality of interacting devices.

Automation systems such as manufacturing systems can comprise a plurality of interacting devices. In order to orchestrate all devices and to execute an automation process within the automation system in which all devices are interacting in an efficient manner, machine learning models are increasingly executed in automation systems.

However, the useful deployment of machine learning models in automation systems currently fully relies on experience and heuristics. The deployment of machine learning models in complex automation systems is thus not easily managed or is done with less efficiency.

Considering the afore-mentioned prior art, the invention addresses the problem to provide an improved method for operating an automation system with a plurality of interacting devices. In particular, the method should be easily scalable with growing complexity of the automation system. Particularly an efficient operation of the automation system is desired. Furthermore, the invention addresses the problem of providing an improved automation system with a plurality of interacting devices. In particular, the automation system should scale easily with growing complexity and should be operable efficiently.

These problems of the invention are solved by a method for operating an automation system with a plurality of interacting devices having the features listed in claim 1 and by an automation system with a plurality of interacting devices having the features listed in claim 13.

Preferred aspects of the current invention are contained in the respective dependent claims, in the description following below and in the drawing.

The method according to the invention is a method for operating an automation system with a plurality of interacting devices. The method according to the invention involves the steps of
- holding a plurality of machine learning models that are configured to infer and of
- estimating an inference time for each machine learning model, and of
- attributing the machine learning models to the devices depending on the inference time, and executing the machine learning models to the attributed devices and - finally and optionally of
- operating the automation system with the accordingly executed machine learning models.

Preferably, the method according to the invention involves the steps of considering timing constraints of the interacting devices and attributing the machine learning models to the devices, which not only depends on the inference time, but also on the timing constraints of the interacting devices.

With the method according to the invention, the inference time of each machine learning model can be used for attributing the respective machine learning model to the respective device for executing the machine learning models. Advantageously, this method would not fully rely on choices made by experienced automation system designers, but the inference time may be suitably used as a viable criterion for attributing the machine learning models to the respective devices.

Throughout this application, the phrase "executing the machine learning models" may be understood as "computing the machine learning models" and may also be replaced by this term.

Preferably, and advantageously, in the method according to the invention, the machine learning models are neural network models, particularly trained neural network models. Alternatively, and advantageously, the machine learning models are knowledge graph models or other types of machine learning models.

In an advantageous and optional aspect of the method according to the invention, more than one machine learning model are executed on one device. Particularly in this aspect of the invention, attributing machine learning models to suitable devices has significant benefits, since the joint usage of a single device for multiple machine learning models chosen dependent on the respective inference times allows to optimize the usage of the information processing power of the devices. Hence, the information processing power, also denoted as computing power hereafter, of the devices is efficiently used. On the other hand, available but unused information processing power may be advantageously used for more advanced models. Thus, either a more efficient or a more computationally powerful usage of the computing resources of the devices is possible in this aspect of the invention. Preferably, the machine learning models that are executed on one device are co-located onto the respective device and, by preference, executed on the device, respectively.

In a particularly relevant aspect of the invention, attributing the machine learning models to the devices additionally depends on device resources, particularly on a processing power and/or working memory, of the respective devices. In this aspect of the invention, the resources of the devices are considered explicitly for attributing the machine learning models to the devices. Particularly for a heterogeneous automation network with lots of devices with significantly varying resources, this aspect of the invention allows for appropriately attributing the machine learning models to the devices.

In a preferable aspect of the method according to the invention, the resources of the devices are estimated prior to attributing. In an alternative and advantageous aspect of the invention, the resources of the devices are constantly or repeatedly monitored during carrying out the method.

In a preferred aspect of the invention, the inference time is estimated in dependence of a resource, particularly a processing power and/or a working memory. In principle, the inference time of a particular machine learning model on a particular device can be deduced from a previously estimated inference time of this machine learning model on a device with known resources and scaled to the particular device under consideration with the knowledge of the respective resource such as computing power.

Advantageously, in the method according to the invention, the automation system is a manufacturing system and/or a logistic system and/or a maintenance system. Especially in manufacturing systems and logistic systems and maintenance systems numerous devices are connected to each other and interact with each other. Thus, in these automation systems an appropriate scheduling of the execution of machine learning models accordingly offers significant benefits.

In a preferred aspect of the method according to the invention, the machine learning models are obtained by means of a user interface. With this user interface, the machine learning models may be received and preferably stored in a suitable server or storage for immediate or later use.

In the method according to the invention, the machine learning models are preferably attributed depending on the inference time in such a way, that first an attribution plan dependent on the inference time of the devices is generated according to which the machine learning models are attributed and later executed onto the devices.

In an advantageous aspect of the method according to the invention, the attribution plan is generated using a bin packing problem algorithm, wherein the bins represent the devices, and the packed items represent the machine learning models. Particularly in the field of solving bin packing problems approximate or heuristic solution algorithms exist although the bin packing problem itself in principle is thought to be computationally hard. In this aspect of the invention, the known approaches to the bin packing problem may be easily transferred to the problem of the present invention. Accordingly, known approaches to the bin packing problem may be easily adapted to carrying out this aspect of the invention.

In the method according to the invention, target inference times are preferably considered for the respective machine learning model during attributing the machine learning models to the devices depending on the inference time, particularly for generating the attribution plan. These target inference time may arise from the planned interaction of different devices of the automation system which requires fulfilling target times for synchronized operation. These target inference times may be imposed as constraints, particularly on the bin packing problem.

In an advantageous optional aspect of the method according to the invention, the method is repeatedly or continuously carried out. With repeatedly or continuously carrying out the method according to the invention, the inference times can be repeatedly or continuously monitored. In case inference times change, e. g. due to additional computational load of the respective devices the machine learning models are executed on, the inference times that are used for attributing the machine learning models to the devices may be updated. In this case, a reattribution with the updated inference times is possible, preferably in case the previously updated inference times and the updated inferences time differ by a certain absolute or relative threshold or in case a particular target inference time may not be satisfied anymore.

The automation system according to the invention comprises a plurality of interacting devices and is configured to carry out the method according to the invention as described above. The automation system according to the invention additionally comprises a storage that contains machine learning models and additionally or alternatively an interface to a source of machine learning models.

The automation system according to the invention additionally comprises an inference server, which is configured to determine an inference time of the machine learning models, and an implementation planning unit, which is configured to determine an attribution plan for the machine learning models onto the devices dependent on the inference times.

The automation system according to the invention comprises an execution unit, that is configured to execute the machine learning models on the devices, that the machine learning models have been attributed to.

In a particularly relevant aspect of the invention, the automation system with the inference server is also configured to determine a resource of the devices to which the machine learning models are attributed, particularly a computing power and/or a working memory.

In the following, the invention is explained in more detail by means of an embodiment shown in the figure.
- Figure 1: shows an industrial automation network according to the invention that constitutes a manufacturing network in a schematic diagram and
- Figure 2: shows a schematic diagram of the execution of the method according to the invention.

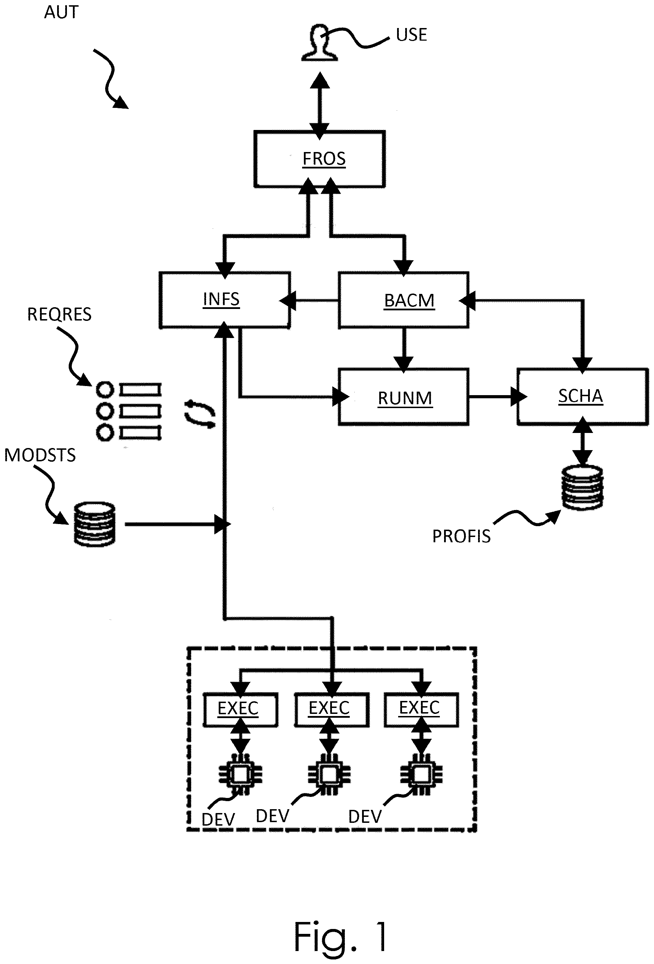

The industrial automation system AUT according to the invention shown in figure 1 is a manufacturing network that consists of a plurality of interconnected devices DEV, here manufacturing devices DEV, such as tools, in the depicted - among others - embodiment drilling machines, that are configured to produce a product based on the green part. The automation system AUT additionally comprises devices DEV that constitute transport devices DEV, such as conveyor belts, that transport the green parts between the manufacturing devices DEV. Furthermore, the automation system AUT comprises control devices DEV which coordinate the manufacturing devices and the transport devices DEV.

The control devices utilize machine learning models that are trained to carry out decision tasks within the automation system AUT. One important machine learning model in the depicted embodiment is represented by a neural network model, that is trained to recognize images of green parts, that have been preprocessed wrongly. Such green parts should be removed from further processing in the automation system AUT. For an actual execution within the automation system AUT, the neural network model is deployed onto a device DEV and processes input data from the respective green parts. The input data are collected by obtaining optical images of the green parts with a camara. The camera images are fed to the neural network model and the neural network model responds with a digital answer, either "continue with this green part for further manufacturing" or "remove this green part from further manufacturing".

In order not to interrupt the manufacturing process, the digital answer should be generated by the neural network model within a time span of 500 Milliseconds. In other words, the image analysis with the neural network model is subject to a constraint that the respective image analysis should take 500 Milliseconds or less.

In further embodiments not specifically shown in the figures, the time span for the digital answer should be 50 Milliseconds or less instead. Different time spans, either smaller or larger, may be subject to further embodiments which are not specifically shown in the figures, and which correspond to the shown embodiments in all other aspects.

The neural network model is a particular model within a collection of neural network models. All neural network models of the collection serve a particular purpose within the automation system AUT and are attributed to the devices DEV of the automation system AUT with the method according to the invention.

The automation system AUT comprises an inference server INFS that gives inference tasks to devices DEV, on which the neural network models are executed in an execution environment EXEC of the respective device DEV.

The inference server INFS receives inference requests and places these inference requests into a respective queue REQRES. The execution of the neural network models is then delegated to the execution environments EXEC of the devices DEV.

To execute the respective neural network models in the execution environments EXEC, the neural network models are stored in a model storage server MODSTS. The neural network models are ready for copying from the model storage server MODSTS to the execution environment EXEC. In the depicted embodiment, devices DEV have execution environments EXEC, that execute more than one neural network model.

During carrying out the method, the request rate for receiving inference results and the respective inference times, that are needed to run the respective neural network model, are monitored by a runtime monitor RUNM. For this task, the runtime monitor RUNM is connected to the inference server INFS and receives the request rate information and the inference time information from the inference server INFS.

This information is transferred to a schedulability analyzer SCHA, that stores the inference time of each neural network model for the device DEV on which it is currently running and the associated inference rate of the neural network model and the associated boundary condition for the inference time for the respective neural network model in a database denoted as a profiling info server PROFIS.

The profiling info server PROFIS additionally contains the respective information processing capabilities of all devices DEV currently constituting the automation system AUT.

For each device DEV, the profiling info server PROFIS particularly contains the respective processing power of the execution environments EXEC. Thus, for each further device DEV, the inference time measured on one device can then easily be converted into an assumed inference time by considering the individual processing capabilities, particularly the processing powers, of the respective further devices DEV. In another embodiment, the inference time for each neural network model is previously measured for each device DEV and is stored in the profiling info server PROFIS.

The schedulability analyzer SCHA then retrieves these data and solves a scheduling problem by suitably distributing the neural network models on the devices DEV such, that the information processing resources of the devices DEV are used the most. To achieve this, the distribution of the neural network models across the devices DEV is solved by means of a bin packing problem algorithm.

Within this bin packing problem, the information processing capabilities of the execution environments EXEC of the devices DEV are treated as bins. The neural network models are treated as items to be packed into these bins. For this bin packing problem, the packing of multiple neural network models into a single device DEV is not excluded to efficiently use the available information processing capabilities. However, which neural network models may be packed - potentially with each other - into which device DEV remains to be solved with solving this bin packing problem. For the bin packing problem, the optimal solution requires algorithms that do not scale well with the complexity of the bin packing problem. Thus, an optimal solution is only available for artificial and theoretical problems.

In practice, as for the depicted embodiment, an optimal solution is not derived for the current problem, but an approximate solution, in the case described here a heuristic solution algorithm, is used for scheduling the neural network models onto the various devices DEV. With this heuristic solution algorithm, the bin packing problem is solved and the distribution of the neural network models across the devices DEV is solved. In the depicted embodiment, additional constraints for the inference times are considered and are reflected in the heuristic solution as solution constraints.

In the described embodiment, the profiling info server PROFIS contains the respective processing power of the execution environments EXEC of each device DEV and the inference time is calculated for each device DEV based on a single measurement on one device DEV.

In further embodiments, which are otherwise identical to the above-described embodiment, the profiling info server PROFIS contains the actual inference time for each neural network model for each execution environment EXEC of each device DEV. The inference time for each neural network model for each device DEV is obtained by initially executing each neural network model in every execution environment EXEC of every device DEV and by monitoring the respective inference time. In this embodiment, all respective inference times are obtained under realistic conditions in a first step and used later on for scheduling with the schedulability analyzer SCHA.

For this, each neural network model is converted, e. g. compiled, for each execution environment EXEC of every device DEV, so that for each configuration the associated inference time may be deduced. In the embodiment described above, however, in which the inference times are calculated instead of measured for each configuration, the compiling process and the presumed resulting efficiency of the executable code of the neural network model are also considered for calculating the inference times.

These obtained inference times are also stored in the profiling info server PROFIS. During carrying out the method, when e. g. specific runtime conditions within the automation system are subject to change, the inference times are continuously monitored in addition. When absolute or relative deviations from the initially obtained inference times exceed a certain threshold, the inference times stored in the profiling info server PROFIS are updated and the schedulability analyzer SCHA determines a new distribution of the neural network models across the devices DEV.

The schedulability analyzer SCHA communicates the scheduling information via a backend manager BACM to the inference server INFS, that triggers the execution of the respective neural network model. For this, the model storage server MODSTS is called to copy the respective neural network model to the execution environment EXEC of the respective device DEV.

With this distribution, the neural network models are executed in the respective devices DEV. The inference server INFS distributes the received inference requests to the respective neural network models using the queues REQRES. The obtained results from the respective neural network models are also stored in the queues REQRES and delivered by the inference server INFS to the respective devices DEV that request the execution of the neural network models.

A user USE can exchange information with the automation system AUT via a frontend server FROS. Through the frontend server FROS, the user USE can introduce neural network models together with specific time constraints that have to be considered for the execution of the respective neural network model. The user USE can also obtain the schedulability information from the schedulability analyzer SCHA through the backend manager BACM.

In the embodiment described above, the machine learning models are neural network models only. However, in further embodiments, which are not additionally depicted, the machine learning models can be constituted by other machine learning models such as knowledge graph models, e. g. containing production relevant information for devices DEV of the automation system, such as production ability and the like, that may be used for continuously adapting the automation process of the automation system.

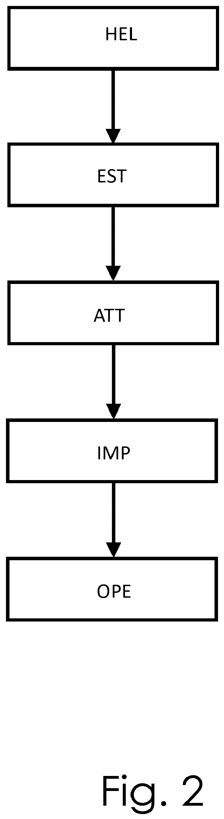

The above-mentioned steps of executing the method according to the invention are briefly outlined in figure 2 of the drawing.

First, the plurality of machine learning models is received through the frontend server FROS and held HEL in the model storage server MODSTS.

After this step, the inference time for each machine learning model is estimated EST.

In a subsequent step, the machine learning models are attributed ATT to the devices DEV depending on the inference time.

Then, the attributed machine learning models are executed IMP on those devices DEV, which they are attributed to.

Finally, the automation system AUT is operated OPE with the devices DEV with the accordingly executed machine learning models.

## Claims

1. Method for operating an automation system (AUT) with a plurality of interacting devices (DEV), involving the steps of
- holding (HEL) a plurality of machine learning models that are configured to infer,
- estimating (EST) an inference time for each machine learning model, and
- attributing (ATT) the machine learning models to the devices (DEV) depending on the inference time and executing the machine learning models on the attributed devices, and
- operating (OPE) the automation system (AUT) with the accordingly executed machine learning models.

2. Method according to claim 1, wherein the machine learning model is a neural network model, particularly a trained neural network model.

3. Method according to one of the preceding claims, wherein attributing (ATT) the machine learning models to the devices (DEV) additionally depends on device resources, particularly on a processing power and/or working memory, of the devices (DEV).

4. Method according to one of the preceding claims, wherein the resources of the devices (DEV) are estimated prior to attributing (ATT).

5. Method according to one of the preceding claims, wherein more than one machine learning model are executed (IMP) on one device (DEV).

6. Method according to one of the preceding claims, wherein the inference time is estimated (EST) in dependence of a resource of the respective device (DEV), particularly a processing power and/or a working memory.

7. Method according to one of the preceding claims, wherein the automation system (AUT) is a manufacturing system and/or a logistic system and/or a maintenance system.

8. Method according to one of the preceding claims, wherein the machine learning models are obtained by means of a user interface (FROS).

9. Method according to one of the preceding claims, wherein the machine learning models are attributed (IMP) depending on the inference time such, that first an attribution plan dependent on the inference time of the devices (DEV) is generated according to which the machine learning models are attributed (IMP) to the devices (DEV) and later executed on the devices (DEV).

10. Method according to one of the preceding claims, wherein the implementation plan is generated using a bin packing problem algorithm, wherein the bins represent the devices (DEV) and packed items to be packed into bins represent the machine learning models.

11. Method according to one of the preceding claims, wherein target inference times are considered for the respective machine learning model during attributing (IMP) the machine learning models to the devices (DEV) depending on the inference time, particularly for generating the attribution plan.

12. Method according to one of the preceding claims, which is repeatedly or continuously carried out.

13. Automation system with a plurality of interacting devices (DEV), comprising
- a storage (MODSTS) containing machine learning models and/or an interface (FROS) to a source of machine learning models, and
- an inference server (INFS), which is configured to determine an inference time of the machine learning models, and an
- attribution planning unit (SCHA), which is configured to determine an attribution plan for the machine learning models onto the devices dependent on the inference times for execution.

14. Automation system according to the preceding claim, in which the execution unit (INFS) is configured to execute the machine learning models on the devices (DEV).
